# EUROPEAN PATENT SPECIFICATION

(11) **EP 2 304 269 B1**
(45) Date of publication and mention of the grant of the patent: **15.08.2012**
(21) Application number: 09770424.1
(22) Date of filing: 19.06.2009
(51) Int. Cl.: F16G 5/16

(54) **DRIVE BELT HAVING TRANSVERSE ELEMENTS AND A TENSION ELEMENT**
ANTRIEBSRIEMEN MIT QUERELEMENTEN UND ZUGELEMENT
COURROIE DE TRANSMISSION DOTEE D'ELEMENTS TRANSVERSAUX ET D'UN ELEMENT DE TENSION

(30) Priority: 24.06.2008 NL 2001716
(43) Date of publication of application: 06.04.2011
(73) Proprietor: Robert Bosch GmbH, 70442 Stuttgart (DE)
(72) Inventor: CREBOLDER, Cornelia, Adriana, Elizabeth, NL-4708 NN Roosendaal (NL); VERHOEVEN, Peter, NL-5345 DJ Oss (NL); BRANDSMA, Arjen, NL-5045 WN Tilburg (NL); PENNINGS, Bert, NL-5052 CH Goirle (NL); SCHRAUWERS, Geert-Jan, B-2480 Dessel (BE)
(74) Representative: Plevier, Gabriel Anton Johan Maria
(86) International application number: PCT/NL2009/000135
(87) International publication number: WO 2009/157761

(56) References cited:
- EP-A- 1 739 325
- WO-A2-2008/094035
- JP-A- 2001 020 795
- JP-A- 2006 090 542
- US-A- 2 387 183
- US-A- 6 102 823

## Description

The present invention relates to the drive belt according to the preamble to the following Claim 1. A drive belt of this type is generally used to transfer a drive power in a drive line between two axles, the drive belt being passed around two or more rotatable pulleys and being tensioned there between. A commonly known application of such a transfer is the continuously variable transmission for 2-wheeled motor vehicles, such as scooters. The drive belt is commonly known per se and is already described in detail, for example, in European patent publication numbered 0135710, and more recently in Patent Application EP-A-1626201.

The known drive belt comprises a more or less continuous series of discrete transverse elements and one or two self-contained tension elements. Each transverse element is provided with two main faces oriented in the peripheral direction of the drive belt and with two side faces placed at an acute angle to each other, which side faces extend on both sides of the transverse element between the main faces and are intended for the frictional contact with the transmission pulleys. The transverse element describes one or two openings, which extend substantially in the axial, transverse or lateral direction up to the side face and through which opening the tension element or tension elements is/are led. A first part of the transverse element is therefore located radially inside the tension element, a second part radially outside it, and a third part of the transverse element, which is situated between the first and the second part thereof and connects these parts to each other, is located at the height of the tension element or tension elements. The tension element consists of a rubber or soft plastic support, in which a number of tension cords made of fiber material and having a more or less circular cross section are embedded. In place of these tension cords, it is also possible in principle to provide the tension element with a single metal or hard-plastic tension band of substantially elongated cross section, which is hence flexible in the peripheral direction. More especially, the dimension of the tension band in the radial direction or height thereof amounts to between 1% and 10%, and preferably 2% to 3%, of the dimension thereof in the axial direction or width thereof.

The transverse elements are coupled to the tension element in the peripheral direction of the drive belt, i.e. are mutually connected by means of a positive connection, i.e. by other means than friction (alone), so that considerable forces can be transferred there between in this direction for the benefit of the torque transfer between the transmission pulleys during operation. In the axial direction, there is generally in the known drive belt only a non-positive, i.e. friction type connection between a transverse element and the tension element, so that the two drive belt components can be moved apart relatively easily in this direction. This latter feature allows for a favorable simple drive belt design with few components. Moreover the transverse elements and the tension element can thereby be easily slid one into the other for the benefit of assembly of the drive belt.

In the drive belt, the total surface area of the transverse cross sections of the tension cords used, or tension band used, in a tension element is determinant of the load-bearing capacity thereof. In practice, however, it was found that a tension band has in this case relatively less load-bearing capacity than a corresponding number of tension cords. More especially, it was found that the tension band can break after an unexpectedly small number of operating hours of the drive belt, as a result of a so-called fatigue fracture thereof.

The present invention is based on the wish to improve the load-bearing capacity of the drive belt with tension band(s), whilst the transverse cross section thereof remains constant. According to the invention, the sought object is achieved by application of the measures from the characterizing part of Claim 1.

In contrast to the present invention, it is a universal characteristic of the known drive belt design that the tension element which is used therein is clamped in the axial or transverse direction in the transverse element. To this end, the tension element can extend to just outside the transverse elements, i.e. to beyond a respective side face thereof, whereby the support thereof in the transmission comes into (frictional) contact with the transmission pulleys. A clamping force applied substantially in the axial direction to the drive belt thus in the first instance acts upon the support of the tension element, which latter is hence forced into the openings in the transverse elements and clamped tight therein. A belt design which is shaped thus and which works in this way is known from the aforementioned patent application EP-A-0135710. Another option is to detain the tension element in the axial direction in the opening in the transverse element by closing off the said opening on both sides thereof, at least partially and in contact with the tension element, as is known from JP-A-2006-090542, JP-A-2006-057835 and US-A-6,102,823.

Specifically in case of US-A-6,102,823 it is noted that the transverse elements of this known drive belt are composed of at least three separate subcomponents that are fixed to each other in the belt. A first, beam-like shaped, subcomponent of the elements is located radially outside or above the tension element and a second, likewise, beam-like shaped sub-component of the elements is located radially inside or below the tension element and a third sub-component is provided to interconnect said first and second sub-components. The said opening of this known belt is thus defined not only by the said first and second sub-components in the oppositely oriented radial directions of the belt, but also by the said third sub-component in one of the oppositely oriented axial directions of the belt. As a result the said opening closely fits and even appears to clamp the tensile means in the said axial direction, thus preventing movement thereof relative to the transverse element in that direction.

At least where the known drive belt in the transmission is passed around the pulleys and is thereby curved in the peripheral direction thereof, the material of the support will be inclined to deform as a consequence thereof. More especially, the support material has the tendency to bulge in the axial direction. However, by virtue of the fact that the tension element in this direction is detained in the opening in the transverse element, or between the transverse element and the pulley, this bulging is suppressed and an axially directed pressure force is built up in the tension element. Such bulging of the support material, and the associated axial pressure force therein, also occur if the nominal dimension of the tension element in the radial direction, or the height thereof, is greater than the nominal dimension of the opening in the transverse elements in this direction. Hence, the support material of the tension element in the drive belt is at least to some extent vertically compressed, as a result of which it bulges in terms of its width. The term nominal is thus here used to indicate that the dimension in question is measured in an unloaded, or non-deformed, state, i.e. relates to the dimension of a respective drive belt component taken separately from the belt assembly.

This latter measure is also, normally speaking, applied in the known drive belt, so that the tension element and transverse element components thereof advantageously clamp together. In this context, it is known to make the tension element 20% higher than the nominal height of the opening in the transverse elements.

From those studies on which the current invention is founded, it was possible to deduce, however, that although the normally used tension cords, as a result of the pressure force applied thereto in the axial direction by the support, are subjected to no, or barely any, extra load, the tension band, as a consequence thereof, is indeed placed under considerable extra load. It is here likely that this extra loading of the tension band is attributable to the, certainly in comparison to the tension cords, relatively high rigidity thereof, particularly in the transverse direction, as a result of the elongated transverse cross section which is used for the said tension band.

By applying the measure according to the invention, that is to say by choosing the dimension of the tension element in the transverse or axial direction, i.e. the width thereof, smaller than the smallest local dimension in this direction of the opening in the transverse element in which it is received, the said extra loading advantageously does not occur and the load-bearing capacity of the drive belt is improved. In other words, in the drive belt according to the invention, the nominal width of the opening in the transverse elements is greater than the nominal width of the tension element at the site of these respective openings. According to the invention, such a difference in width amounts preferably to 5% to 50%, more especially to 25% to 35% or around 30%, of the nominal radial dimension, i.e. the nominal height, of the tension element.

The invention is explained in greater detail below with reference to the figures.
Figure 1 represents a side view of the known drive belt.
Figure 2 shows schematically a transverse cross section of the known drive belt.
Figure 3 shows schematically a longitudinal cross section of the known drive belt.
Figure 4 represents schematically a cross section of a first example of the drive belt according to the invention.
Figure 5 represents schematically a cross section of a second example of the drive belt according to the invention.
Figure 6 represents schematically a third example of the drive belt according to the invention.

In the figures, the same or similar structural parts of the drive belt are respectively indicated with the same reference numerals.

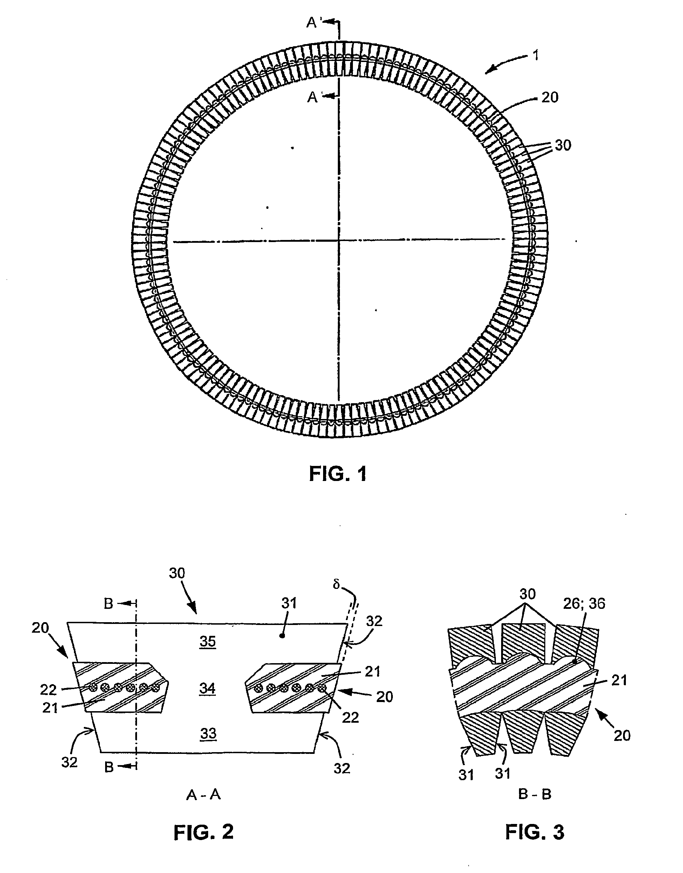

Figures 1, 2 and 3 show the known drive belt 1, wherein Figure 1 represents a side view, Figure 2 the transverse cross section A-A, and Figure 3 the longitudinal cross section B-B thereof. The known drive belt 1 is provided with two self-contained tension elements 20, which consist of a number of tension cords 22 embedded in a support 21. In the shown example, the two supports 21 each comprise six tension cords 22 of round transverse cross section. In addition, the known drive belt 1 comprises an, at least virtually, continuous series of so-called transverse elements 30. The transverse elements 30 are provided with a, in comparison to the axial or width and the radial or height dimensions thereof, small dimension in the peripheral or longitudinal direction of the drive belt 1, i.e. the thickness.

Each transverse element 30 is provided with two main faces 31 oriented in the mutually opposite peripheral directions of the drive belt 1, and with two side faces 32 placed at an acute angle to each other, which side faces extend on both sides of the transverse element 30 between the main faces 31 and are intended for the frictional contact with the pulleys of the transmission in which the drive belt 1 is used. The transverse element 30 describes two openings, which extend substantially in the axial or transverse direction up to a respective side face 32 and through which the tension elements 20 are led. A first part 33 of the transverse element 30 is therefore located radially inside the tension element 20, a second part 35 radially outside it, and a third part 34 of the transverse element 30, which is situated between the said first and second parts 33, 35 thereof and connects these to each other, is located at the (radial) height of the tension elements 20. The support 21 of the tension elements 20 is made of a flexible material, such as rubber or a soft plastic, whilst the transverse elements 30 are made specifically of a rigid and, preferably, wear-resistant material, such as fiber-reinforced plastics.

The transverse elements 30 are coupled to the tension element 20, in the peripheral direction of the drive belt 1, by means of a so-called positive connection, so that considerable forces can be transferred there between in this direction for the benefit of the torque transfer between the transmission pulleys during operation. In Figure 3, it can be seen that, in the known drive belt 1 which is shown here, the said positive connection consists of an axially oriented, radially outwardly directed bulge or ridge 26 of the tension element 20, which ridge 26 hooks into a recess or groove 36 in the transverse element 30 at the site of the bottom side of the third part 35, which third part is situated above the said opening in which the respective tension element 20 is found. The said positive connection can also, of course, be realized by providing the transverse elements 30 with a ridge, which ridges then engage in purpose-made recesses in the tension elements 20, or by providing the tension elements 20 between two adjoining transverse elements 30 with axially and/or radially, i.e. in the width and/or height directions, directed thickenings.

In the axial direction, a so-called non-positive connection, i.e. a frictional contact, exists between the said components 30, 20 of the drive belt 1, so that a tension element 20 can be slid in this axial direction relatively easily out of (the said opening in) the transverse elements 30, or conversely can be fitted therein for the benefit of the assembly of the drive belt 1.

In order during operation to support in the transmission the mechanical connection between the transverse elements 30 and the tension elements 20, as well as the transfer of friction between the transverse elements 30 and the transmission pulleys, in the known drive belt 1 the tension elements 20 are dimensioned such that they, at least in a non-loaded state, extend in the axial or transverse direction to just outside the transverse elements 30. In other words, as is indicated in Figure 2, the axial dimension of the tension elements 20 is, to a slight, yet clearly perceptible degree "δ", greater than the dimension in the axial direction of the said openings in the transverse elements 30 in which they are fitted. As a result, a clamping force applied substantially in the axial direction to the drive belt 1 by a respective pulley thus in the first instance acts upon the support 21 of the tension element 20, which latter is hence forced into the opening in the transverse elements 30 and clamped tight therein, as a result of which the said mechanical connection there between is reinforced also in the radial direction.

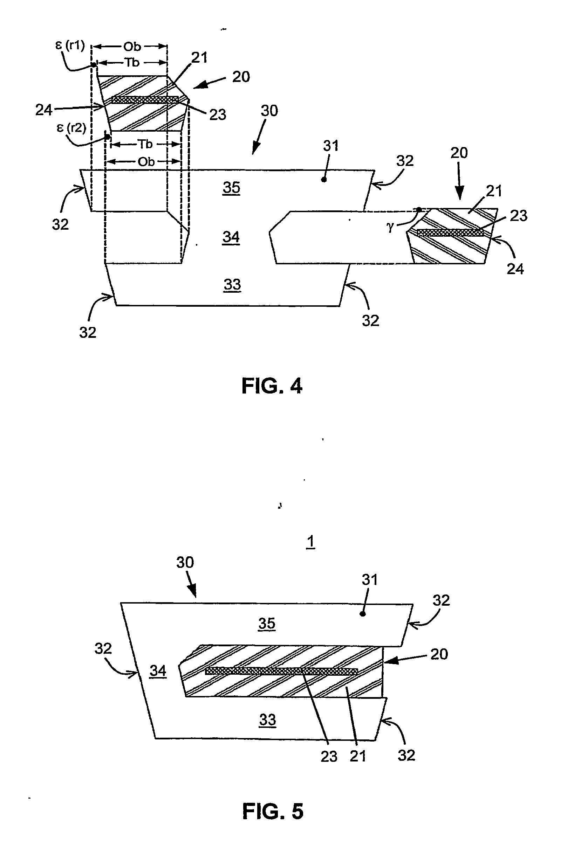

Although theoretically, for each tension element 20, in place of a number of tension cords 22, a single tension band 23 may also be used, the applicant found that the mere exchange thereof in an otherwise unchanged design of the drive belt 1 did not in practice yield the anticipated result. More especially, the thus shaped drive belt exhibited a disappointing working life and/or load-bearing capacity. According to the present invention, this deficiency can be overcome, however, with an additional modification of the known drive belt design (i.e. in addition to the use of a single tension band 23 in place of the number of tension cords 22) in a very simple and reliable manner. The drive belt 1 shaped according to the present invention is represented in Figure 4.

As is represented in Figure 4 with reference to the separate tension element 20 and transverse element 30 components of the drive belt 1, the said additional modification of the known drive belt design from Figures 1 to 3 concerns a reduction of the nominal width Tb of the tension element 20 with respect to the nominal width Ob of the opening in the transverse elements 30. The term nominal is thus here used to indicate that the dimension in question is measured in an unloaded, or non-deformed, state, i.e. relates to the dimension of a respective, separate drive belt component 20, 30.

According to the present invention, the transverse element 30 thus extends in width to beyond the tension element 20, so that the imaginary plane in which the side face 32 of the transverse element 30 is situated does not intersect the tension element 20. In other words, the dimension in the axial or transverse direction of the opening defined by the transverse element 30, in which opening a tension element 20 is accommodated, is greater than the dimension of that tension element 20 in this direction, at least if measured at the site of an opening, at an arbitrary radial position r1, r2, and in the non-deformed state of especially the tension element 20. Such a difference in nominal width according to the invention, or the play in the axial direction which is hence nominally present between the said imaginary plane and an at least substantially axially oriented end face 24 of a respective tension element 20, is indicated in Figure 4 and hereinafter as the nominal axial play "ε".

Because in the drive belt 1 according to the invention the tension elements 20, viewed in the axial direction, remain inside the transverse elements 30, i.e. do not extend beyond the side faces 32 thereof, during operation only the latter come into (frictional) contact with the pulleys of the transmission. Thus the tension bands 23 of the tension element 20 are not, at least in this direction, placed under extra load, which leads to a considerable improvement in the working life and/or load-bearing capacity of the drive belt 1 as a whole.

As a result of the nominal axial play ε according to the present invention, in the drive belt 1 space is provided for an axial bulging of the tension element 20, or the support 21 thereof, inside the said opening of the transverse elements 30 thereof. This bulging of the support 21 occurs at least where the drive belt 1 is passed around the transmission pulleys, under influence of the curvature which is there imparted to the drive belt in the peripheral direction. In addition, the tension element 20 can be provided with a nominal dimension in the radial direction or height which is greater than the nominal dimension of the opening in the transverse elements 30 in this direction. As a result, the support material 21 of the tension element 20 in the drive belt 1 is to some extent compressed in the vertical direction, whereby this will expand, or bulge, just a little in the axial direction. Such a nominal oversize in the vertical direction of the tension element 20 with respect to the opening in the transverse elements 30 is indicated in Figure 4 with the reference "γ".

It was found, however, that also with regard to the aforesaid nominal oversize γ in the vertical direction of the tension element 20, the known design rules which were developed in relation to and are applied in the known drive belt 1 having tension cords 22 are not, or at least not wholly, adequate in the drive belt 1 according to the present invention. According to the present invention, this parameter γ should not be too small, owing to the lack of clamping of the tension element 20 in the axial direction. Equally, however, this must certainly not be chosen too large, owing to the extra load, or pressure force, which is hence now applied to the tension element 20 in the radial direction. In particular, the nominal height of the tension element 20 according to the present invention should have a value ranging between 106% and 111 % of the nominal height of the opening in the transverse elements (30) and, more especially, should be equal to 108% thereof.

In Figure 5, likewise in transverse cross section, a second illustrative embodiment of the drive belt 1 is represented, in which the present inventive concept is applied. This specific drive belt design comprises one single tension element 20 provided with a single tension band 23. The transverse element 30 is of more or less C-shaped configuration, so that between the first part 33 and the second part 35 thereof an opening is defined. The said opening, in a first axial orientation (to the left in Figure 5), is closed off by the third part 34 of the transverse element 30 and, in a second, opposite axial orientation (to the right in Figure 5), is open, so that the tension element 20 can be easily fitted therein.

Just as in the first illustrative embodiment of the invention, which is shown in Figure 4, in this second illustrative embodiment the transverse element 30 extends in the axial direction to beyond the tension element 20, so that, according to the insight on which the present invention is founded, the transmission pulleys cannot come into (pushing) contact with this tension element 20.

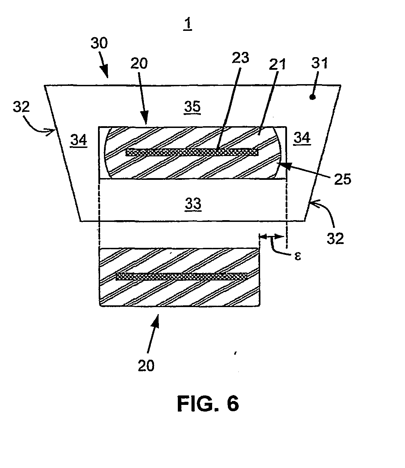

In Figure 6, likewise in transverse cross section, a third illustrative embodiment of the drive belt 1 is represented, in which the present inventive concept is applied. This drive belt design, too, comprises one single tension element 20 provided with a single tension band 23, which, in this case, is accommodated in an opening, closed off on all sides, in the transverse element 30, which is thus of more or less O-shaped configuration. The said opening, in the two axial orientations (both to the left and to the right in Figure 6), is closed off by the third part 34 of the transverse element 30. At the foot of Figure 6, it can be seen that the nominal width of the tension element 20 is here (round about 30%) smaller than the nominal width of the opening, so that the axial play ε according to the present invention is provided there between. In Figure 6, a contour 25 of the support 21, which contour is bulged in the axial direction or width, is also schematically represented, where this, or the tension element 20, is accommodated in the opening of the transverse element 30. Such bulging occurs because the nominal dimension of the tension element 20 in the radial direction, i.e. the height thereof, is greater than the nominal dimension of the opening in the transverse element 30 in this direction, so that in the drive belt 1 the support material 21 of the tension element 20 is compressed in this direction.

The play between the transverse element 30 and the tension element 20 which is still remaining in the drive belt 1, which play is visible in Figure 6, is in this case available for an additional deformation, or axial bulging, of the tension element 20 in the transmission, where this is passed around the pulleys.

Thus the invention a/o concerns a drive belt 1 having a self-contained tension element 20 comprising a support 21 and a tension band 23 that is embedded therein, that is of metal and that is provided with a substantially elongated cross section, and having a series of discrete transverse elements 30, which are each provided with two main faces 31 oriented in the peripheral direction of the belt 1 and with two side faces 32 placed at an acute angle to each other, which side faces 32 extend on both axial sides of the transverse element 30 between the main faces 31 thereof, and which transverse elements 30 each define an opening through which the tension element 20 is led, in which drive belt 1 the transverse elements 30 are coupled to the tension element 20 in the peripheral direction and in which drive belt 1 the opening is larger than the tension element 20 at least in the axial direction. The tension element 20 and the transverse elements 30 being mutually displaceable in the axial direction, at least for some mutual axial displacement there between.

## Claims

1. Drive belt (1) having a self-contained tension element (20) comprising a support (21) and a tension band (23) that is embedded therein, that is of metal and that is provided with a substantially elongated cross section, and having a series of discrete transverse elements (30), which are each provided with two main faces (31) oriented in the peripheral direction of the belt (1) and with two side faces (32) placed at an acute angle to each other, which side faces (32) extend on both axial sides of the transverse element (30) between the main faces (31) thereof, and which transverse elements (30) each define an opening through which the tension element (20) is led, wherein, at least in the axial direction, the opening is larger than the tension element (20) and in that the tension element (20) and the transverse elements (30) are mutually displaceable in the axial direction, i.e. are held together in that direction by friction only, at least for a small amount of mutual axial displacement, **characterized in that**, at least at the site of the opening in the transverse elements (30) and at least at one location along the entire dimension of the tension element (20) in the axial direction, the dimension of the tension element (20) in the radial direction is at least equal to and preferably is greater than the local dimension of the opening **in that** direction, wherein said dimension of the tension element (20) in the radial direction has a value ranging from 106% to 111 %, and preferably is equal to approximately 108% of the said dimension of the opening **in that** direction.

2. Drive belt (1) according to Claim 1, **characterized in that** the difference between the said dimension of the tension element (20) in the axial direction and the said local dimension of the opening **in that** direction has a value ranging from 5% to 50% of the dimension of the respective opening in the radial direction.

3. Drive belt (1) according to Claim 1, **characterized in that** the difference between the said dimension of the tension element (20) in the axial direction and the said local dimension of the opening **in that** direction has a value ranging from 25% to 35% of the dimension of the respective opening in the radial direction.

4. Drive belt (1) according to Claim 1, **characterized in that** the difference between the said dimension of the tension element (20) in the axial direction and the said local dimension of the opening **in that** direction has a value of approximately 30% of the dimension of the opening in the radial direction.

5. Drive belt (1) according to one or more of the preceding claims, **characterized in that** the transverse elements (30) are coupled to the tension element (20) in the peripheral direction.

6. Drive belt (1) according to one or more of the preceding claims, **characterized in that** the dimension of the tension band (23) in the radial direction has a value ranging from 1% to 10%, and preferably is equal to 2% to 3% of the dimension of the tension band (23) in the axial direction.

## Patentansprüche

1. Antriebsriemen (1), der ein eigenständiges Zugelement (20) hat, das eine Abstützung (21) und ein darin eingebettetes Zugband (23) umfasst, das aus Metall besteht und einen im Wesentlichen länglichen Querschnitt aufweist, und der eine Reihe einzelner Querelemente (30) hat, die jeweils zwei in der Umfangsrichtung des Riemens (1) angeordnete Hauptflächen (31) sowie zwei in einem spitzen Winkel zueinander angeordnete Seitenflächen (32) aufweisen, wobei sich die Seitenflächen (32) an beiden axialen Seiten des Querelements (30) zwischen den Hauptflächen (31) davon erstrecken, und wobei die Querelemente (30) jeweils eine Öffnung definieren, durch die das Zugelement (20) geführt ist, wobei die Öffnung mindestens in der axialen Richtung größer als das Zugelement (20) ist, und wobei das Zugelement (20) und die Querelemente (30) in der axialen Richtung gegenseitig verschiebbar sind, d.h. in dieser Richtung lediglich durch Reibung mindestens in einem geringen Maße gegenseitiger axialer Verschiebung zusammengehalten werden, **dadurch gekennzeichnet, dass**, mindestens an der Stelle der Öffnung in den Querelementen (30) und mindestens an einer Stelle entlang der Gesamtabmessung des Zugelements (20) in der axialen Richtung, die Abmessung des Zugelements (20) in der radialen Richtung mindestens der lokalen Abmessung der Öffnung in dieser Richtung entspricht und vorzugsweise größer als diese ist, wobei die Abmessung des Zugelements (20) in der radialen Richtung einen Wert von 106% bis 111% aufweist und vorzugsweise etwa 108% der Abmessung der Öffnung in dieser Richtung entspricht.

2. Antriebsriemen (1) nach Anspruch 1, **dadurch gekennzeichnet, dass** die Differenz zwischen der Abmessung des Zugelements (20) in der axialen Richtung und der lokalen Abmessung der Öffnung in dieser Richtung einen Wert von 5% bis 50% der Abmessung der jeweiligen Öffnung in der radialen Richtung aufweist.

3. Antriebsriemen (1) nach Anspruch 1, **dadurch gekennzeichnet, dass** die Differenz zwischen der Abmessung des Zugelements (20) in der axialen Richtung und der lokalen Abmessung der Öffnung in dieser Richtung einen Wert von 25% bis 35% der Abmessung der jeweiligen Öffnung in der radialen Richtung aufweist.

4. Antriebsriemen (1) nach Anspruch 1, **dadurch gekennzeichnet, dass** die Differenz zwischen der Abmessung des Zugelements (20) in der axialen Richtung und der lokalen Abmessung der Öffnung in dieser Richtung einen Wert von etwa 30% der Abmessung der Öffnung in der radialen Richtung aufweist.

5. Antriebsriemen (1) nach einem oder mehreren der vorstehend aufgeführten Ansprüche, **dadurch gekennzeichnet, dass** die Querelemente (30) in der Umfangsrichtung mit dem Zugelement (20) gekoppelt sind.

6. Antriebsriemen (1) nach einem oder mehreren der vorstehend aufgeführten Ansprüche, **dadurch gekennzeichnet, dass** die Abmessung des Zugbandes (23) in der radialen Richtung einen Wert von 1% bis 10% und vorzugsweise einen Wert von 2% bis 3% der Abmessung des Zugbandes (23) in der axialen Richtung aufweist.

## Revendications

1. Courroie de transmission (1) ayant un élément de tension (20) autonome comprenant un support (21) et une bande de tension (23) noyée dans celui-ci, constituée de métal et pourvue d'une section transversale substantiellement allongée, et ayant une série d'éléments transversaux discrets (30) qui sont chacun dotés de deux faces principales (31) orientées dans la direction périphérique de la courroie (1) et de deux faces latérales (32) placées suivant un angle aigu l'une par rapport à l'autre, lesquelles faces latérales (32) s'étendent sur les deux côtés axiaux de l'élément transversal (30) entre les faces principales (31) de celui-ci, et lesquels éléments transversaux (30) définissent chacun une ouverture à travers laquelle l'élément de tension (20) est guidé, l'ouverture, au moins dans la direction axiale, étant plus grande que l'élément de tension (20) et l'élément de tension (20) et les éléments transversaux (30) étant déplaçables mutuellement dans la direction axiale, c'est-à-dire étant maintenus ensemble dans cette direction par friction uniquement, au moins sur une petite quantité de déplacement axial mutuel, **caractérisée en ce que**, au moins sur le site de l'ouverture dans les éléments transversaux (30) et au moins en un emplacement le long de toute la dimension de l'élément de tension (20) dans la direction axiale, la dimension de l'élément de tension (20) dans la direction radiale est au moins égale, et de préférence supérieure, à la dimension locale de l'ouverture dans cette direction, ladite dimension de l'élément de tension (20) dans la direction radiale ayant une valeur comprise entre 106 % et 111 %, et de préférence étant égale à environ 108 % de ladite dimension de l'ouverture dans cette direction.

2. Courroie d'entraînement (1) selon la revendication 1, **caractérisée en ce que** la différence entre ladite dimension de l'élément de tension (20) dans la direction axiale et ladite dimension locale de l'ouverture dans cette direction a une valeur comprise entre 5 % et 50 % de la dimension de l'ouverture respective dans la direction radiale.

3. Courroie d'entraînement (1) selon la revendication 1, **caractérisée en ce que** la différence entre ladite dimension de l'élément de tension (20) dans la direction axiale et ladite dimension locale de l'ouverture dans cette direction a une valeur comprise entre 25 % et 35 % de la dimension de l'ouverture respective dans la direction radiale.

4. Courroie d'entraînement (1) selon la revendication 1, **caractérisée en ce que** la différence entre ladite dimension de l'élément de tension (20) dans la direction axiale et ladite dimension locale de l'ouverture dans cette direction a une valeur d'environ 30 % de la dimension de l'ouverture dans la direction radiale.

5. Courroie d'entraînement (1) selon l'une quelconque ou plusieurs des revendications précédentes, **caractérisée en ce que** les éléments transversaux (30) sont accouplés à l'élément de tension (20) dans la direction périphérique.

6. Courroie d'entraînement (1) selon l'une quelconque ou plusieurs des revendications précédentes, **caractérisée en ce que** la dimension de la bande de tension (23) dans la direction radiale a une valeur comprise entre 1 % et 10 %, et de préférence est égale à 2 % à 3 % de la dimension de la bande de tension (23) dans la direction axiale.
